# EUROPÄISCHE PATENTANMELDUNG

(11) **EP 3 763 576 A1**
(43) Veröffentlichungstag der Anmeldung: **13.01.2021**
(21) Anmeldenummer: 20184849.6
(22) Anmeldetag: 09.07.2020
(51) Int. Cl.: B60R 16/02, H02G 3/04

(54) **KRAFTFAHRZEUGENERGIELEITUNGSBAUKASTEN SOWIE VERFAHREN ZUR HERSTELLUNG EINES KRAFTFAHRZEUGENERGIELEITERS**

(30) Priorität: 10.07.2019 DE 102019118671
(71) Anmelder: Auto-Kabel Management GmbH, 79688 Hausen i.W. (DE)
(72) Erfinder: MEYER, Bernd, 79739 Schwörstadt (DE)
(74) Vertreter: Cohausz & Florack

(57) **Zusammenfassung**

Ein Kraftfahrzeugenergieleitungsbaukasten enthält einen Flachleiter (2) mit einem viereckigen Profil und eine Mehrzahl an Isolationselementen (8), welche eine an das Profil des Flachleiters angepasste Aufnahme aufweisen, wobei die Isolationselemente jeweils eine geringere Längenausdehnung als der Flachleiter aufweisen, wobei der Flachleiter mit zumindest zwei Isolationselementen ausgewählt aus der Mehrzahl der Isolationselemente abschnittsweise ummantelt ist.

## Beschreibung

Der Gegenstand betrifft einen Kraftfahrzeugenergieleitungsbaukasten als auch ein Verfahren zu Herstellung eines Kraftfahrzeugenergieleiters mit einem entsprechenden Baukasten.

Der Einsatz von Flachleitungen, welche ein mehreckiges Profil aufweisen und aus einem Flachleiter aus einem metallischen Vollmaterial isoliert mit einem Isolationswerkstoff gebildet sind, erfreut sich immer größerer Beliebtheit in automotiven Anwendungen. Insbesondere für die Energieverteilung innerhalb eines Kraftfahrzeugs, sei es von der Batterie zum Antriebsstrang oder zum Starter, sei es zwischen dem Generator und der Batterie oder zwischen dem Starter und dem Generator, als auch zur Energieverteilung innerhalb des Kraftfahrzeugs, kommen vermehrt Flachleitungen zum Einsatz. Die Verlegung der Flachleitungen in der Karosserie verlangt häufig, dass diese in zumindest zwei Raumrichtungen gebogen ist.

Eine Flachleitung erstreckt sich in ihrer Längsrichtung und hat zumindest eine breite Oberfläche und zumindest eine schmale Oberfläche, bevorzugt zwei einander (bevorzugt parallel) gegenüber liegende breite Oberflächen und zwei einander (bevorzugt parallel) gegenüber liegende schmale Oberflächen. Eine Flächennormale auf der breiten Oberfläche kann als Hochachse verstanden werden und eine Flächennormale auf der schmalen Oberfläche kann als Querachse verstanden werden. Diese beiden Achsen können senkrecht zueinander als auch senkrecht zur Längsachse liegen.

Für die Verlegung der Flachleitung innerhalb des Kraftfahrzeugs wird diese zumindest um die Hochachse und/oder die Querachse gebogen. Ein Tordieren um die Längsachse ist ebenfalls möglich, kommt jedoch seltener vor.

Flachleitungen für die Energieverteilung haben Leitungsquerschnitte jenseits von 50mm². Leitungsquerschnitte von 100mm² und mehr sind durchaus üblich. Zur Verlegung in den hierfür vorgesehenen Bauräumen des Kraftfahrzeugs werden Flachleitungen üblicherweise vorkonfektioniert. Dazu werden die Flachleitungen bereits bei deren Herstellung gebogen. Durch dieses 3D-Umformen werden besonders hohe Anforderungen an die Isolation gestellt.

Bei der Planung der Biegegeometrien muss stets die mechanische Belastung des Isolationswerkstoffs berücksichtigt werden. Insbesondere sind kleine Biegeradien für das Isolationsmaterial problematisch. Auch Abzweigungen entlang des Energieleiters müssen durch entsprechende Aussparungen in der Isolation berücksichtigt werden. Darüber hinaus kann es zu unterschiedlichen Temperaturanforderungen an das Isolationsmaterial entlang der Längsachse des Flachleiters kommen.

Bei bisherigen Flachleitern ist der Isolationswerkstoff derart gewählt, dass er stets den maximalen Anforderungen genügt. Solche Anforderungen können durch enge Biegeradien und/oder durch hohe Temperaturen gegeben sein. Der Isolationswerkstoff ist bisher stets entlang der gesamten Längsachse der Flachleitung an die maximalen Anforderungen angepasst, was den Einsatz höherwertiger Werkstoffe erfordert. Die Flachleitung wird bisher komplett mit einem einzigen Isolationswerkstoff extrudiert. Dies ist hinsichtlich des effizienten Einsatzes von Isolationsmaterialien problematisch.

Die Extrusion des Isolationswerkstoffs entlang der Längsachse ist darüber hinaus problematisch beim Einsatz harter Isolationswerkstoffe oder großer Querschnitte, die den Einsatz großer Extruder und langer Kühlstrecken notwendig machen.

Zur Vermeidung dieser Nachteile lag dem Gegenstand die Aufgabe zu Grunde, die Isolation von 3D-umgeformten Flachleitungen zu vereinfachen.

Diese Aufgabe wird durch einen Kraftfahrzeugenergieleitungsbaukasten nach Anspruch 1 sowie ein Verfahren nach Anspruch 15 gelöst.

Der Kerngedanke besteht darin, eine Kraftfahrzeugenergieleitung nach dem Baukastenprinzip mit Isolationselementen versehen zu können. Aufgrund einer großen Anzahl verschiedenartiger Leitungsgeometrien und kurzer Produktzyklen ist die Isolation von Energieleitungen nach dem Baukastenprinzip besonders vorteilhaft.

Die Flachleitung wird mit Isolationselementen, die in einer Mehrzahl vorhanden sind, bedarfsgerecht, abschnittsweise isoliert. Hierfür haben die Isolationselemente im Querschnitt eine Aufnahme mit einer lichten Weite, die dem Querschnittsprofil des Flachleiters angepasst ist. Die Isolationselemente werden unabhängig von der Flachleitung geformt, insbesondere extrudiert. Die Isolationselemente sind aus einem Werkstoff, der gegenüber herkömmlichen, auf Leitungen extrudierten Werkstoffen biegesteifer ist. Auf die fertig gebogenen Flachleiter werden bedarfsgerecht die Isolationselemente aufgeschoben. Dabei werden die Isolationselemente bevorzugt senkrecht zur Längsachse des Flachleiters auf den Flachleiter aufgeschoben. Das Baukastenprinzip beruht darauf, dass entlang des Flachleiters nach und nach Isolationselemente bedarfsgerecht mit entsprechenden Biegegeometrien auf den vorhandenen Flachleiter aufgeschoben werden können.

Die Anzahl der verschiedenen Querschnitte von Flachleitern ist überschaubar, insbesondere im Wesentlichen lediglich abhängig von dem geforderten Leitungsquerschnitt. Hierbei ist denkbar, dass Flachleiter mit Standartleitungsquerschnitten von 50mm², 100mm², 150mm², 200mm² usw., insbesondere in 50mm ²-Schritten, mit einem vorbestimmten Verhältnis zwischen der Breite und der Höhe vorgesehen sind. Für jeden dieser Leitungsquerschnitte kann ein Baukasten an Isolationselementen vorhanden sein.

Die an dem Flachleiter vorgenommenen Biegungen lassen sich mit angepassten Isolationselementen bestücken. Der Flachleiter wird, nachdem er aus einem Ausgangsmaterial geformt wurde, beispielsweise stranggepresst oder geschnitten, in die geforderte Geometrie durch Biegen gebracht. Anschließend werden zumindest zwei Isolationselemente ausgewählt, die auf den Flachleiter aufgesetzt werden und somit den Flachleiter abschnittsweise ummanteln. Die Isolationselemente werden somit nach dem Biegen bedarfsgerecht auf den Flachleiter aufgesteckt.

Durch die Auswahl der Isolationselemente aus der Mehrzahl der Isolationselemente des Baukastens ist es möglich, für jeden Abschnitt entlang des Flachleiters das jeweils passende Isolationselement, sei es betreffend eine Biegung um eine Hochachse oder eine Biegung um eine Querachse oder gar um eine Torsion um eine Längsachse, auszuwählen.

Gemäß einem Ausführungsbeispiel wird vorgeschlagen, dass der Flachleiter sich entlang einer Längsachse erstreckt. Der Flachleiter hat ein mehreckiges, bevorzugt viereckiges, insbesondere rechteckiges Querschnittsprofil sowie eine zwei einander gegenüberliegende breite Oberflächen und zwei einander gegenüberliegende schmale Oberflächen. Die breiten Oberflächen können auch als Ober- und Unterseite bezeichnet werden, die schmalen Oberflächen können auch als Seitenflächen bezeichnet werden. Eine Flächennormale auf der breiten Oberfläche ist parallel zu einer Hochachse und eine Flächennormale auf einer schmalen Oberfläche ist parallel zu einer Querachse. Hochachse und Querachse stehen insbesondere senkrecht zueinander. Ferner stehen Hochachse und Querachse senkrecht zur Längsachse. Die genannten Flächen und Richtungen gelten ebenso für die Isolationselemente.

Der Flachleiter wird, angepasst an seinen jeweiligen Anwendungsbereich, entlang seiner Längsachse zumindest einmal um die Querachse und/oder die Hochachse gebogen. Hierdurch entsteht ein dreidimensionales Leitungsprofil. Zur Isolation wird dann der Flachleiter mit entsprechenden Isolationselementen, ausgewählt aus der Mehrzahl der verschiedenen Isolationselemente, abschnittsweise ummantelt.

Gemäß einem Ausführungsbeispiel wird vorgeschlagen, dass sich die Aufnahme des Isolationselements in einer Längsachse erstreckt. Die Aufnahme kann die lichte Weite im Querschnittsprofil des Isolationselementes sein. Entsprechend des Querschnittsprofils des Flachleiters hat auch die Aufnahme eine Querachse und eine Hochachse. Auch diese Achsen können senkrecht zueinander stehen. Entsprechend der Biegung des Flachleiters kann auch das Isolationselement entlang seiner Längsachse zumindest einmal um die Querachse und/oder die Hochachse gebogen sein. Bevorzugt ist in einem Isolationselement jeweils nur eine Biegung um eine der Achsen vorgesehen. Für jede der Biegungen des Flachleiters kann somit zumindest eine Anzahl an Isolationselementen mit entsprechenden Biegungen vorgesehen sein. Um den Flachleiter zu isolieren, werden die jeweiligen Isolationselemente aus dem Baukasten ausgewählt und der Flachleiter mit dem entsprechenden Isolationselement ummantelt.

Um die Anzahl der verschiedenen Isolationselemente, von denen jeweils eine Mehrzahl in dem Baukasten verfügbar sind, überschaubar zu halten, wird vorgeschlagen, dass der Flachleiter Standartbiegungen um jeweils eine Achse haben kann. Dabei wird vorgeschlagen, dass ein Biegewinkel einer Biegung um eine der Achsen von zumindest 15°, bevorzugt zumindest 30°, insbesondere 45° oder bis zu 90° beträgt. Für die Biegungen kann somit eine vorbestimmte Anzahl an Biegewinkeln vorgesehen sein und für jeden Biegewinkel kann einer oder mehrere vorbestimmte Biegeradien vorgesehen sein. Für jede Kombination aus Biegewinkel und Biegeradius kann jeweils ein Isolationselement vorgesehen sein, dass in dem Baukasten in einer Mehrzahl verfügbar gemacht wird. Die Isolationselemente sind vorgesehen, derart, dass deren Aufnahmen in Längsrichtung an die Biegung des Flachleiters angepasst sind. Eine Anpassung sowohl des Biegewinkels als auch des Biegeradius ist vorgeschlagen.

Die Isolationselemente können beispielsweise als Spritzgussteile vorgesehen sein, wobei für jeden Leiterquerschnitt in Verbindung mit jeweils einem Biegewinkel und jeweils einem Biegeradius ein Isolationselement vorgesehen ist, welches in dem Baukasten in einer Mehrzahl zur Verfügung gestellt ist. Insbesondere kann für jedes dieser Isolationselemente jeweils eine Spritzgussform vorgesehen sein. Ist die Spritzgussform einmal vorhanden, so lassen sich die Isolationselemente in einer Mehrzahl besonders kostengünstig herstellen, insbesondere sind die Isolationselemente dann erheblich kostengünstiger, als wenn die Isolation mittels Extruder auf den Flachleiter aufgebracht würde.

Gemäß einem Ausführungsbeispiel wird vorgeschlagen, dass zumindest zwei Isolationselemente mit Biegungen um voneinander verschiedene Biegewinkel und/oder voneinander verschiedene Biegerichtungen vorgesehen sind. Für jeweils eine Biegung mit einem Biegewinkel und einem Biegungsradius um jeweils eine der Achsen kann jeweils ein Isolationselement vorgesehen sein, welches in dem Baukasten in einer Mehrzahl zur Verfügung gestellt werden kann. Damit bietet der Baukasten für jede mögliche Biegung eines jeden Flachleiters um jeden möglichen Biegeradius ein entsprechendes Isolationselement, mit dem der Flachleiter ummantelt werden kann.

Zur Isolation des Flachleiters können zumindest zwei Isolationselemente nacheinander in Längsrichtung des Flachleiters, bevorzugt einander in Längsrichtung des Flachleiters überlappend, an dem Flachleiter angeordnet sein. Dabei können die Isolationselemente miteinander verrasten, insbesondere im Bereich ihrer Überlappung. Somit kann ein Flachleiter nach und nach mit den entsprechenden Isolationselementen versehen werden, um den jeweiligen Anforderungen gerecht zu werden.

Wie eingangs bereits erläutert, können unterschiedliche Temperaturanforderungen an die Isolation im Verlauf der Flachleitung vorhanden sein. Um diesen verschiedenen Temperaturanforderungen gerecht zu werden, können für jede der oben beschriebenen Kombinationen aus Biegewinkel, Biegeradius und Querschnittsfläche jeweils zwei verschiedene Isolationselemente aus Isolationswerkstoffen mit voneinander verschiedenen Elastizitätsmodulen und/oder Isolierstoffklassen nach DIN EN 60085 vorgesehen sein.

Die verschiedenen Elastizitätsmodule können beispielsweise dann nützlich sein, wenn die Flachleitung im Einsatz unterschiedlichen dynamischen Belastungen ausgesetzt sind, wobei die Isolation diese dynamischen Belastungen ebenfalls standhalten muss. Verschiedene Temperaturanforderungen können durch Isolationselementen verschiedener Isolierstoffklassen berücksichtigt werden.

Gemäß einem Ausführungsbeispiel wird vorgeschlagen, dass zumindest ein Isolationselement mit einer Aufnahme mit einer stirnseitigen Öffnung und einem der stirnseitigen Öffnung gegenüberliegenden Verschluss vorgesehen ist. Eine Energieleitung kann gegebenenfalls über Abzweigungen verfügen, die je nach Bedarf kontaktiert werden oder nicht. Um einen "Blindstopfen" zur Verfügung zu stellen, der einen Abgang isoliert, welcher nicht genutzt wird, wird ein entsprechendes Isolationselement mit einem Verschluss vorgeschlagen. Der Verschluss kann auch als Boden oder Deckel verstanden werden.

Im Verlauf des Flachleiters kann es zu Querschnittsversprüngen kommen. Insbesondere können die Leitungsquerschnitte zwischen den oben genannten Größen variieren, beispielsweise kann ein Leitungsquerschnitt von 100mm² auf 150mm² vergrößert werden oder von 250mm² auf 150mm² reduziert werden, wobei die genannten Maßangaben jeweils beispielhaft zu verstehen sind. Einem solchen Querschnittsversprung des Leiterquerschnitts kann in dem Baukasten durch ein entsprechendes Isolationselement Rechnung getragen werden. Es wird vorgeschlagen, dass zumindest ein Isolationselement an einer ersten Stirnseite eine Aufnahme mit einer ersten lichten Weite hat und an einer der ersten Stirnseite gegenüberliegenden zweiten Stirnseite eine Aufnahme mit einer zweiten, gegenüber der ersten lichten Weite größeren lichten Weite hat. Die Stirnseiten liegen in Längsrichtung der Aufnahme einander gegenüber.

Gemäß einem Ausführungsbeispiel wird vorgeschlagen, dass ein Isolationselement als Verbindungsnippel oder Verbindungsmuffe gebildet ist. Dadurch lassen sich die Isolationselemente untereinander besonders einfach miteinander kontaktieren.

Gemäß einem Ausführungsbeispiel wird vorgeschlagen, dass zumindest ein Isolationselement in einem Überlappungsbereich für ein zweites Isolationselement Rastelemente und/oder Anschläge aufweist. Wie oben beschrieben, werden die Isolationselemente in Längsrichtung nacheinander auf den Flachleiter aufgeschoben oder aufgesteckt. Die Isolationselemente überlappen dabei bevorzugt einander. Um die Isolationselemente zueinander zu fixieren, können Rastelemente vorgesehen sein. Um ein zu weites Aufschieben der Isolationselemente aufeinander zu verhindern, können Anschläge vorgesehen sein.

Gemäß einem Ausführungsbei spiel wird vorgeschlagen, dass zumindest ein Isolationselement in einem Querschnitt zumindest drei, bevorzugt vier Seitenwände aufweist, wobei eine der Seitenwand in Längsrichtung durchgehend geschlitzt ist. Insbesondere ist ein der Seitenwände mit einer kürzeren Seitenlänge geschlitzt. Dies ist insbesondere eine Schmalseite. Der Schlitz verläuft bevorzugt entlang einer Längsachse über die Längsrichtung des Isolationselements. An dem Schlitz können die Seitenwände auseinander gedrückt werden, um das Kabel in das Isolationselement einzustecken.

Gemäß einem Ausführungsbeispiel wird vorgeschlagen, dass entlang des Schlitzes zwei einander gegenüberliegende Berührflächen gebildet sind. Im geschlossenen Zustand berühren sich die Berührflächen zumindest teilweise. Die Flächennormalen der Berührflächen verlaufen bevorzugt senkrecht zur Längsachse des Isolationselements. An den Berührflächen können die Seitenwände miteinander gekoppelt, insbesondere formschlüssig gekoppelt werden. Der Formschluss ergibt sich insbesondere in Richtung der Flächennormalen der Berührflächen. Die Berührflächen werden durch eine elastische Rückstellkraft der Seitenwände gegeneinander gedrückt.

Gemäß einem Ausführungsbeispiel wird vorgeschlagen, dass die Berührflächen zueinander kongruente Querschnittsprofile aufweisen. Durch diese Querschnittsprofile lassen sich die Berührflächen formschlüssig koppeln. Die Berührflächen können ineinander verhakt werden, insbesondere in Form eines Reißverschlusses oder eine Zipverbindung.

Gemäß einem Ausführungsbeispiel wird vorgeschlagen, dass eine der Berührflächen einen Rücksprung aufweist und eine der Berührflächen einen in den Rücksprung eingreifenden Vorsprung aufweist, insbesondere dass der Vorsprung pilzkopfförmig ist. Eine Berührfläche kann einen Vorsprung aufweisen und die andere Berührfläche kann einen hierzu passenden Rücksprung. Vorsprung und Rücksprung können über Hinterschnitte ineinander greifen und/oder einander hintergreifen, so dass ein Formschluss zumindest in Richtung der Flächennormalen der Berührflächen erfolgt.

Gemäß einem Ausführungsbeispiel wird vorgeschlagen, dass im Querschnittsprofil der geschlitzten Seitenwand auf einer zumindest einer der Berührflächen abgewandten Seitenfläche ein Falz angeordnet ist. An der Falz kann eine Klammer oder ein Klammerelement angeordnet werden. An der Falzkante kann die Klammer eine Kraft in Richtung der Berührfläche auf die Seitenfläche ausüben. Sind beidseitig der Berührflächen Falzen angeordnet, können die Berührflächen durch die Klammer gegeneinander gedrückt werden.

Gemäß einem Ausführungsbeispiel wird vorgeschlagen, dass der Falz als Hohlprofil gebildet ist. In dieses Hohlprofil kann die Klammer eingreifen und so an der Seitenfläche verliersicher fixiert werden.

Gemäß einem Ausführungsbeispiel wird vorgeschlagen, dass eine Verriegelungsschiene die geschlitzte Seitenwand entlang der Längsachse umgreift. Die Klammer kann sich auch entlang der Längsrichtung der Seitenwand erstrecken und schienenförmig auf der geschlitzten Seitenwand aufliegen. Die Klammer kann als schienenförmiges Element entlang der Längsachse des Isolationselements an der Falz angeordnet sein und den Schlitz abdecken.

Gemäß einem Ausführungsbeispiel wird vorgeschlagen, dass die Verriegelungsschiene in die der Berührfläche abgewandte Seitenfläche des Isolationselements eingreift, insbesondere dass die Verriegelungsschiene den Falz hintergreift. Somit kann die Schiene die Berührflächen entlang der Längserstreckung gegeneinander drücken. Außerdem kann die Schiene eine Abdichtung des Schlitzes entlang der Längsachse bewirken.

Gemäß einem Ausführungsbeispiel wird vorgeschlagen, dass das Isolationselement im Wesentlichen als Flachteil extrudiert wird. Hierbei können die distalen Enden des Querschnitts des so extrudierten Flachteils die Berührflächen bilden. Die distalen Enden des Querschnitts des so extrudierten Flachteils können aus der Ebene des Flachteils heraus ragend extrudiert werden. An dem Flachteil können entlang der Längsachse verlaufende Biegelinien verlaufen. Das extrudierte Flachteil kann al Zuschnitt verstanden werden. Der Zuschnitt wird abgelängt und entlang der Biegelinien gebogen. Im Zuschnitt kann ein mittiger Bereich eine erste Seitenwand bilden. Der mittige Bereich wird durch die Biegelinien, die z.B. Verjüngungen im Querschnitt sind, abgegrenzt. Daran anschließen können sich rechts und links des mittigen Bereichs jeweils zwei äußere Bereiche, die zwei Seitenwände bilden. Jeweils endständig der äußeren Bereiche können die distalen Enden des Zuschnitts aus der Ebene heraus ragen und z.B. senkrecht auf den äußeren Bereichen stehen. An diesen Enden können die Berührflächen gebildet sein.

Gemäß einem Ausführungsbeispiel wird vorgeschlagen, dass zumindest ein Isolationselement in einem Querschnitt zumindest drei zueinander fest angeordnete Seitenwände aufweist und eine vierte Seitenwand als Deckel gebildet ist. Das Isolationselement kann mit der zunächst offenen Seite auf den Flachleiter aufgeschoben werden und anschließend kann diese Seite durch den Deckel verschlossen werden.

Der Deckel kann dabei als freies Bauteil vorgesehen sein oder verschwenkbar an einer der Seitenwände angeordnet sein. Mit Hilfe des Deckels lässt sich der Flachleiter umlaufend umschließend von dem Isolationselement ummanteln.

Zur Fixierung des Flachleiters in der Aufnahme, kann dieser in der Aufnahme verrastend aufgenommen werden. Hierzu können an den an der geöffneten Seitenwand zugewandten Seitenkanten angeordnete Hinterschnitte vorgesehen sein. Die Hinterschnitte sind bevorzugt an den inneren Seitenflächen der der geöffneten Seitenwand zugeordneten Seitenwände vorgesehen. In einem Querschnitt kann das Isolationselement drei zueinander fest angeordnete Seitenwände aufweisen. Eine Öffnung einer Seitenwand zwischen zwei Seitenwänden kann gebildet sein, in die der Flachleiter eingesteckt wird. Die der Öffnung zugewandten Stirnkanten der Seitenwände können nach innen weisende, nach innen geneigte Aufnahmefläche oder nach außen weisende, nach außen geneigte Aufnahmeflächen aufweisen. Über diese Aufnahmeflächen lässt sich der Flachleiter gleitend in der Aufnahme aufnehmen. Die nach innen geneigten Aufnahmeflächen ermöglichen ein zusätzliches Verrasten des Flachleiters in der Aufnahme.

Ein weiterer Aspekt ist ein Verfahren nach Anspruch 15. Ein bereitgestellter und abgelängter Flachleiter wird zunächst um eine Hochachse und/oder eine Querachse gebogen und erfährt damit ein 3D-Profil.

Diese Biegung kann definiert um bestimmte Biegewinkel und/oder bestimmte Biegeradien vorgesehen sein. Entsprechend zumindest eines Biegewinkels einer Biegung des Flachleiters kann ein Isolationselement aus der Mehrzahl der Isolationselemente ausgewählt werden und anschließend kann dieses ausgewählte Isolationselement um den Flachleiter gelegt werden. Der Flachleiter kann dann nacheinander in Längsrichtung isoliert werden, indem jeweils ein ausgewähltes Isolationselement an ein bereits vorhandenes um den Flachleiter gelegtes Isolationselement angelegt wird. Die Isolationselemente werden dabei bevorzugt miteinander formschlüssig verrastet.

Nachfolgend wird der Gegenstand anhand einer Ausführungsbeispiele zeigenden Zeichnung näher erläutert. In der Zeichnung zeigen:
- Fig. 1a,b: Ansichten eines Flachleiters;
- Fig. 2a, b: Ansichten eines gebogenen Flachleiters;
- Fig. 3a-d: Ansichten von Isolationselementen;
- Fig. 4a-g: Querschnitte durch Isolationselemente;
- Fig. 5a-c: ein Aufschieben eines Isolationselements auf einen Flachleiter;
- Fig. 6: ein Isolationselement als Verbindungsmuffe;

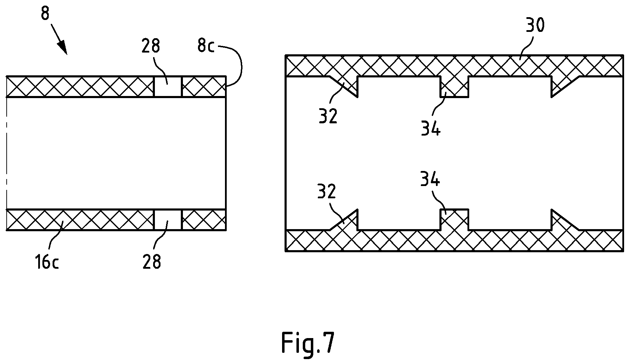

- Fig. 7: ein Isolationselement als Verbindungsstück;
- Fig. 8: einen Kraftfahrzeugenergieleitungsbaukasten;
- Fig. 9: eine isolierte, gebogene Kraftfahrzeugenergieleitung;
- Fig. 10a, b: ein Isolationselement mit einer geschlitzten Seitenwand und einer Klammer;
- Fig. 11: ein Ausführungsbeispiel zweier Berührflächen;
- Fig. 12: ein Ausführungsbeispiel zweier Berührflächen;
- Fig. 13: ein Ausführungsbeispiel zweier Berührflächen;
- Fig. 14: ein Zuschnitt eines Isolationselements.

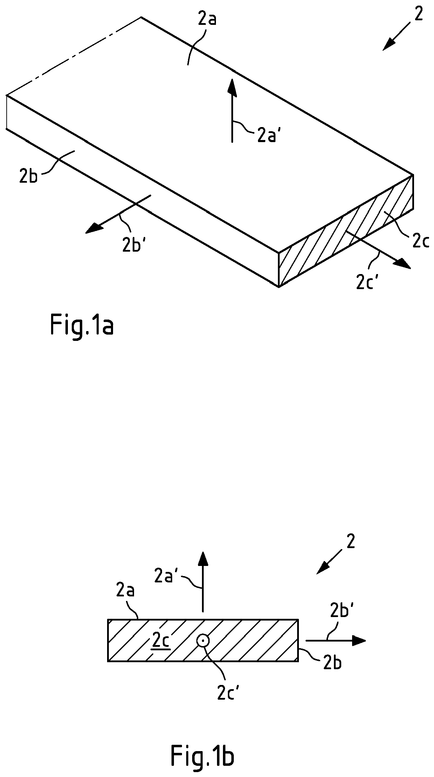

Fig. 1 zeigt einen Flachleiter 2. Der Flachleiter 2 hat ein rechteckiges Querschnittsprofil mit zwei einander gegenüberliegenden breiten Seiten 2a und zwei einander gegenüberliegenden schmalen Seiten 2b. Ferner hat der Flachleiter 2 zumindest eine Stirnseite 2c. Der Flachleiter 2 hat eine Hochachse 2a', welche eine Flächennormale auf der breiten Seite 2a ist. Der Flachleiter 2 hat eine Querachse 2b', welche eine Flächennormale auf der schmalen Seite 2b ist. Schließlich erstreckt sich der Flachleiter in Längsrichtung in einer Längsachse 2c'.

Der Flachleiter 2 ist im Querschnitt in der Fig. 1b erneut dargestellt. Zu erkennen sind die Hochachse 2a', welche senkrecht auf der breiten Seite 2a steht, die Querachse 2b', welche senkrecht auf der schmalen Seite 2b steht sowie die Längsachse 2c.

Ein solcher Flachleiter 2 kann dreidimensional gebogen sein, wobei insbesondere Biegungen um die Querachse 2b' und/oder Biegungen um die Hochachse 2a' besonders häufig vorkommen.

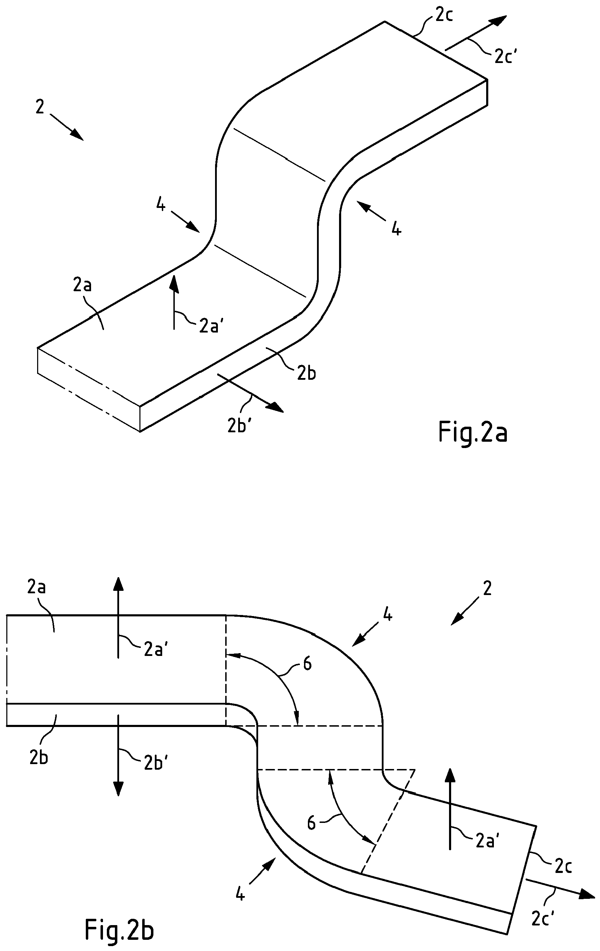

Die Fig. 2a zeigt den Flachleiter 2, welcher entlang seiner Längsachse 2c' zwei Mal um die Querachse 2b' gebogen ist. Hierbei können zumindest zwei voneinander verschiedene Biegeradien 4 realisiert sein. Auch können zumindest zwei voneinander verschiedene Biegewinkel 6 realisiert sein. Insbesondere sind Standardbiegewinkel von 15°, 30°, 45°, 60°, 75° und 90° denkbar. Auch andere Biegewinkel sind denkbar.

Fig. 2b zeigt einen Flachleiter 2, welcher entlang seiner Längsachse 2c' zwei Mal um die Hochachse 2a' gebogen ist. Hierbei können zumindest zwei voneinander verschiedene Biegeradien 4 realisiert sein. Auch können zumindest zwei voneinander verschiedene Biegewinkel 6 realisiert sein.

Es ist nunmehr möglich, für jeweils einen Querschnitt an seiner Stirnseite 2c für jede Kombination aus einem Biegewinkel und einem Biegeradius, wobei die Biegeradien beispielsweise 5cm, 10cm, 20cm etc. sein können und die Biegewinkel wie oben in 15°-Schritten abgestuft sein können, jeweils eine Anzahl an Isolationselementen in dem Baukasten vorzuhalten. Jede Kombination aus einem Biegeradius und einem Biegewinkel kann berücksichtigt sein, wobei hier jeweils eine Biegung um die Querachse 2b' als auch eine Biegung um die Hochachse 2a' möglich ist. Für die Gesamtheit aller Kombinationen aus Biegeradius und Biegewinkel kann jeweils eine Mehrzahl von Isolationselementen vorgesehen sein, die einen entsprechenden Biegeradius und Biegewinkel haben, um als Baukasten für die Isolation des Flachleiters 2 zu dienen.

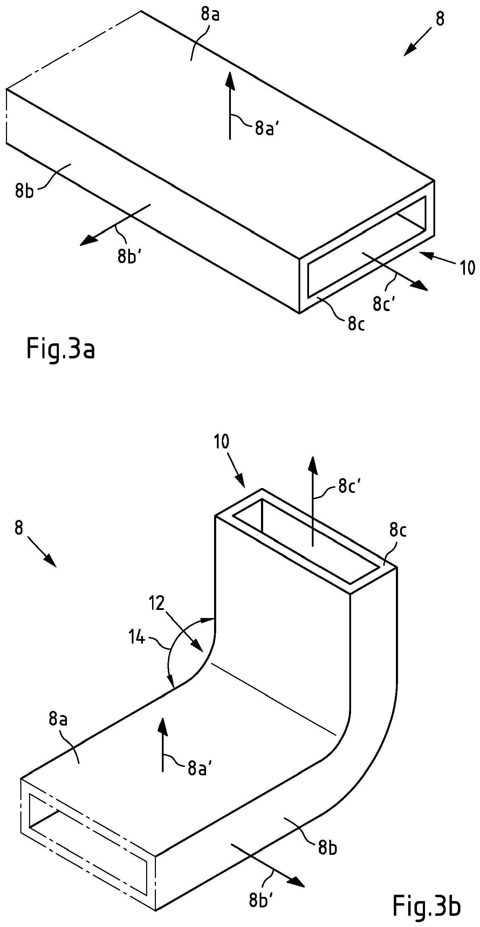

Ein solches Isolationselement kann einerseits als Gerade vorgesehen sein und andererseits als Biegung mit vorgegebenen Biegeradius und Biegewinkel. Die Figs. 3a-d zeigen entsprechende Beispiele von Isolationselementen 8.

Fig. 3a zeigt ein Isolationselement 8, welches sich in Längsrichtung 8c erstreckt, eine breite Seite 8a sowie eine schmale Seite 8b und entsprechende Querachsen 8b' und Hochachsen 8a' aufweist. Die Achsen 8a' - c' können entsprechend den Achsen 2a'-2c' des Flachleiters 2 verlaufen. Das Isolationselement 8 hat eine Aufnahme 10, die sich entlang der Längsachse 8c' des Isolationselements 8 durch das Isolationselement 8 zwischen den beiden Stirnseiten 8c des Isolationselements 8 erstreckt. Der Querschnitt der Aufnahme 10 kann angepasst sein an den Querschnitt eines Flachleiters 2.

Die Fig. 3b zeigt ein Isolationselement 8, welches um die Querachse 8b' gebogen ist. Die Biegung hat einen Biegeradius 12 sowie einen Biegewinkel 14. Biegeradius 12 und Biegewinkel 14 können korrespondieren zu einer Kombination aus Biegeradius 4 und Biegewinkel 6 eines Flachleiters 2. Für jede Kombination aus Biegeradius 4 und Biegewinkel 6 des Flachleiters 2 um die Querachse 2b' kann ein Isolationselement 8 mit einem entsprechenden Biegeradius 12 und Biegewinkel 14 um die Querachse 8b' vorgesehen sein. Somit kann für jede vorgesehene Biegung des Flachleiters 2 um die Querachse 2b' ein entsprechendes Isolationselement 8 bevorzugt in einer Mehrzahl für den Baukasten vorgesehen sein.

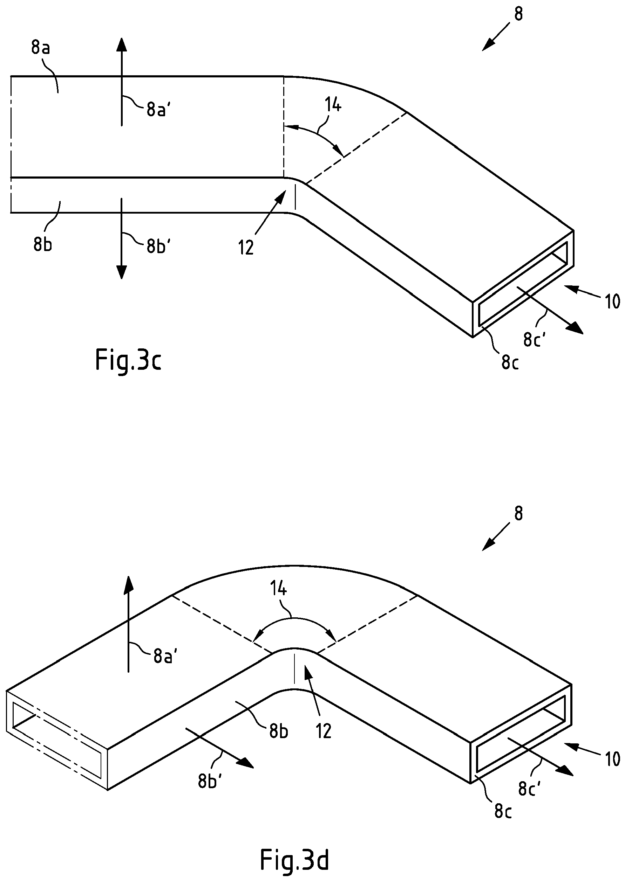

Entsprechendes gilt für Biegungen um die Hochachse 2a'. Hierzu sind in den Figs. 3c und d verschiedene Beispiele von Isolationselementen 8 dargestellt, bei denen eine Biegung um die Hochachse 8a' vorgesehen ist. In der Fig. 3c kann beispielsweise ein Biegewinkel 14 von 45° um die Hochachse 8a' realisiert sein und ein Biegeradius 12 kann beispielsweise 5cm betragen. Ein Biegeradius ist insbesondere ein Radius an der inneren Biegekante des Flachleiters 2.

Eine andere Kombination aus Biegewinkel 14 und Biegeradius 12 kann beispielsweise gemäß der Fig. 3d vorgesehen sein. Hier kann beispielsweise der Biegewinkel 14 60° betragen und der Biegeradius 12 ebenfalls 5cm. Somit kann für jede Kombination aus Biegewinkel und Biegeradius an einem Flachleiter 2 ein entsprechendes Isolationselement 8 vorgesehen sein.

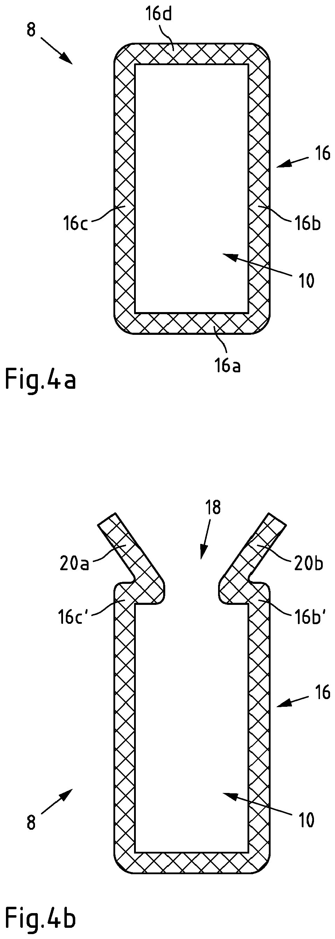

Im Querschnitt hat das Isolationselement 8, wie in der Fig. 4a gezeigt, eine Aufnahme 10 sowie eine äußere Hülle 16, die aus einem Isolationsmaterial gebildet ist. Im Querschnitt hat das Isolationselement 8 vier Seitenwände 16a, 16b, 16c und 16d. Das Isolationselement 8 kann vollständig geschlossen sein, wie in der Fig. 4a gezeigt. Auch ist es möglich, dass zum Einsetzen des Flachleiters 2 in die Aufnahme 10 eine Aufnahmeöffnung vorgesehen ist.

Eine Aufnahmeöffnung kann beispielsweise an den Stirnkanten 16b', 16c' des Mantels 16 vorgesehen sein, wie in Fig. 4b gezeigt. Zwischen den Stirnkanten 16b', 16c' kann eine Öffnung 18 gebildet sein. In der Fig. 4b ist gezeigt, dass die der Öffnung 18 zugewandten Stirnkanten 16b', 16c' nach außen weisende, nach außen geneigte Aufnahmeflächen 20a, 20b haben.

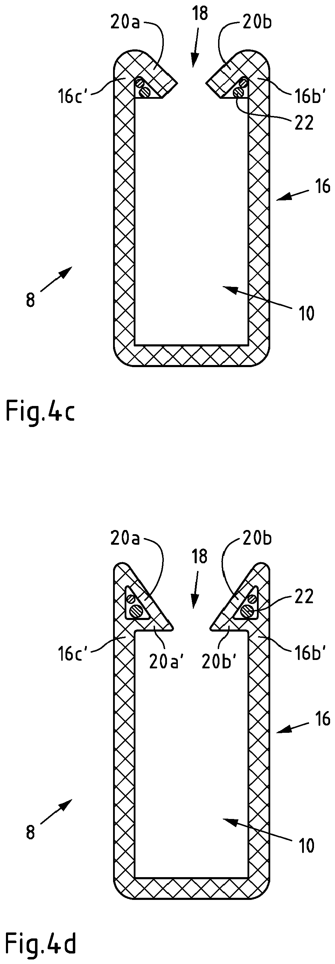

Auch ist es möglich, wie in der Fig. 4c gezeigt, dass die der Öffnung 18 zugewandten Stirnkanten 16c', 16b' nach innen geneigte, nach innen weisende Aufnahmeflächen 20a, 20b aufweisen können.

Innerhalb der Mantelfläche 16 oder in Rücksprüngen, die beispielsweise durch die Aufnahmeflächen 20a, 20b gebildet sind oder auch an jeder anderen beliebigen Stelle des Isolationselements 8, können Kommunikationsleitungen 22, beispielsweise twisted pair Leitungen, Glasfaserleitungen oder dergleichen vorgesehen sein. Somit kann das Isolationselement 8 zusätzlich zur Isolation entsprechende Kommunikationsleitungen aufnehmen.

Fig. 4d zeigt ein weiteres Ausführungsbeispiel, bei dem die nach innen weisenden Aufnahmeflächen 20a, 20b an den Stirnkanten 16c', 16b' als Rastelemente mit Hinterschnitten 20a', 20b' gebildet sind. Ein Flachleiter 2 kann durch die Öffnung 18 in die Aufnahme 10 geschoben werden und an den Hinterschnitten 20a', 20b'verrasten und somit verliersicher in der Aufnahme 10 gehalten sein.

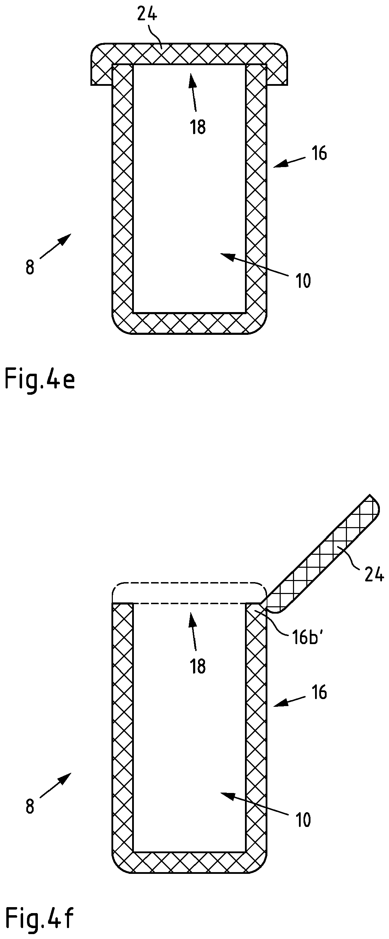

Fig. 4e zeigt ein weiteres Ausführungsbeispiel, bei dem die Öffnung 18 durch einen Deckel 24 verschlossen ist.

Fig. 4f zeigt ein weiteres Ausführungsbeispiel, bei dem die Öffnung 18 durch einen um eine Stirnkante 16b'verschwenkbaren Deckel 24 verschlossen werden kann. Der Deckel kann scharnierartig an der Stirnkante 16b' angelenkt sein.

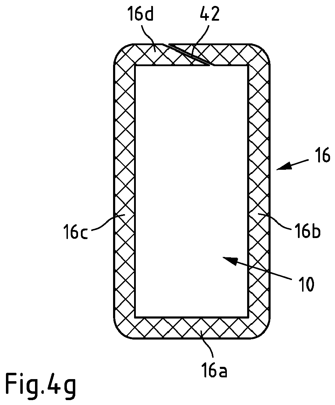

Fig. 4g zeigt ein weiteres Ausführungsbeispiel eines Isolationselements 8 in Anlehnung an Fig. 4a. Hier ist zu erkennen, dass an einer Seitenwand 16d ein Schlitz 42 angeordnet ist. Der Schlitz 42 ist bevorzugt mittig an der Seitenwand 16 angeordnet. Der Schlitz 42 erstreckt sich bevorzugt entlang der Längsachse 8c' des Isolationselements 8, insbesondere entlang des gesamten Isolationselements 8.

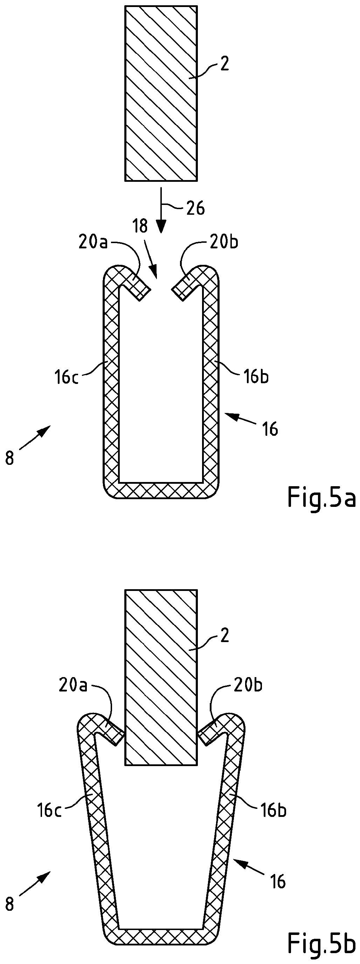

Fig. 5a zeigt ein Isolationselement 8 gemäß der Fig. 4c, das zur Isolation eines Flachleiters 2 auf diesen aufgeschoben wird. Zunächst wird er Flachleiter 2 an der Öffnung 18 positioniert. Der Flachleiter 2 wird, wie in der Fig. 5a gezeigt, in Einschubrichtung 26 in die Öffnung 18 eingeschoben. Im weiteren Verlauf der Bewegung wird der Flachleiter 2 gegen die Aufnahmeflächen 20a, 20b gedrückt, was, wie in Fig. 5b gezeigt, zur Folge hat, dass die Seitenwände 16c, 16b gespreizt werden und der Flachleiter 2 durch die Öffnung 18 gleiten kann.

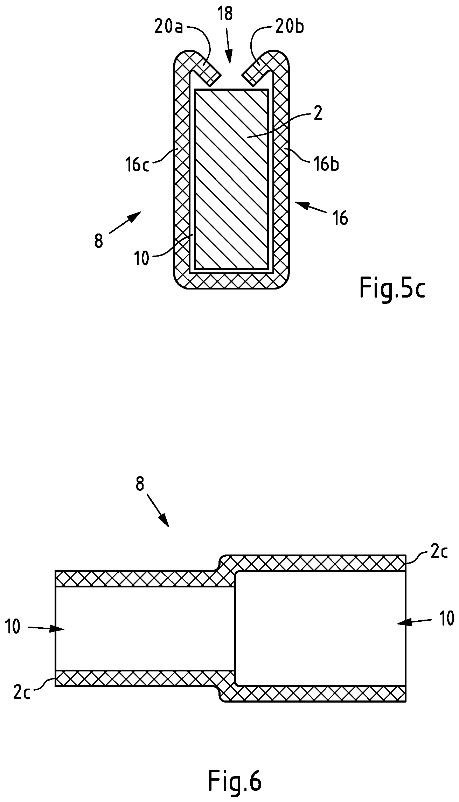

In der Fig. 5c ist gezeigt, dass der Flachleiter 2 vollständig durch die Öffnung 18 eingeschoben ist. Die Seitenwände 16c, 16b sind elastisch zurückgefedert, sodass der Flachleiter 2 verliersicher in dem Isolationselement 8 bzw. der Aufnahme 10 des Isolationselements 8 gehalten ist.

Fig. 6 zeigt ein weiteres Ausführungsbeispiel eines Isolationselements 8, welches als Übergangsmuffe gebildet ist. An einer ersten Stirnseite 2c kann eine lichte Weite einer Aufnahme 10 geringer sein als an einer zweiten Stirnfläche 2c. Das Isolationselement 8 ermöglicht somit einen Querschnittsversprung an dem Flachleiter 2, um gegebenenfalls auch solche Leitungsgeometrien zu unterstützen.

Ein Isolationselement 8 kann im Bereich seiner Stirnseite 8c an einer oder mehreren Seitenwänden 16a-d Öffnungen 28 aufweisen, die zum Verrasten des Isolationselements 8 an einem Verbinder 30 dienen. Ein Verbinder 30 kann ebenfalls als Isolationselement gebildet sein und entsprechend Rastnasen 32 aufweisen, die rastend in Öffnungen 28 aufgenommen werden können. Dadurch kann ein Isolationselement 8 an dem Verbinder 30 befestigt werden. Wenn an dem Verbinder 30 beidseitig entsprechende Rastnasen 32 vorgesehen sind, können zwei Isolationselemente 8 miteinander isolierend verbunden werden. Darüber hinaus kann an dem Verbinder 30 ein Anschlag 34 vorgesehen sein. Der Anschlag 34 kann eine maximale Einschubtiefe eines Isolationselements 8 in den Verbinder 30 definieren.

Wie bereits erläutert, ist für einen bestimmten Leitungsquerschnitt des Flachleiters 2 eine Anzahl an Kombinationen von Biegeradius und Biegewinkel möglich und für jede Kombination kann eine Mehrzahl von Isolationselementen 8 vorgesehen sein.

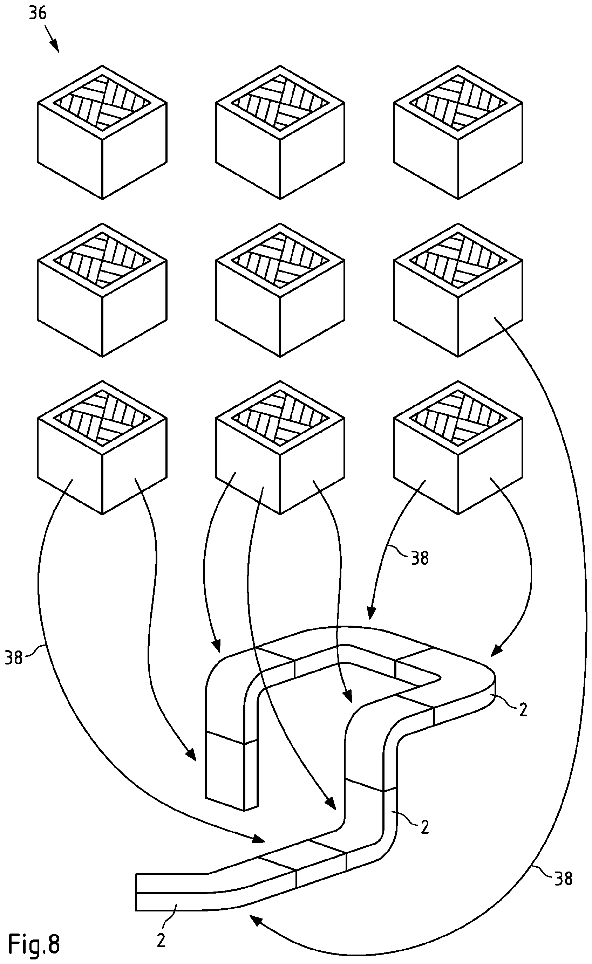

Diese Summe der Isolationselemente kann im Rahmen eines Baukastens 36, wie in Fig. 8 dargestellt, vorgehalten werden. Zur Isolation von Flachleitern 2 kann dann aus dem Baukasten 36 je nach Bedarf ein Isolationselement 8 ausgewählt werden, welches zu eine Abschnitt eines Flachleiters 2, insbesondere entweder einer Geraden oder einer Biegung mit einem bestimmten Biegeradius und Biegewinkel, passt. Dies ist durch die Striche 38 in der Fig. 8 dargestellt. Bedarfsweise kann je nach dem welcher Biegewinkel und welcher Biegeradius an einem Abschnitt des Flachleiters 2 realisiert ist, ein entsprechendes Isolationselement 8 aus dem Baukasten 36 entnommen werden.

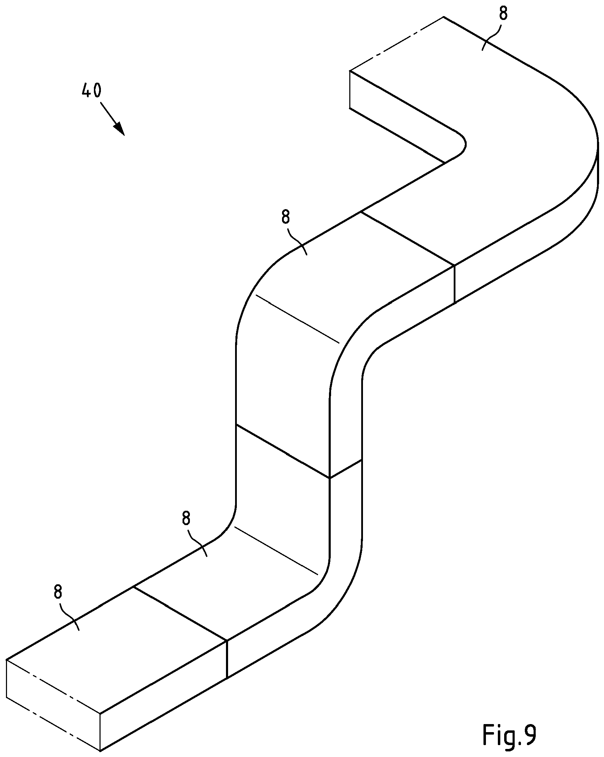

Eine isolierte Leitung 40 ist in der Fig. 9 dargestellt. Dort ist zu erkennen, dass die Leitung 40 Abschnittsweise verschiedenste Biegungen um verschiedenste Winkel mit verschiedensten Biegewinkeln und Biegeradien aufweisen kann und jeweils an einer Biegung ein Isolationselement 8 entsprechend angeordnet ist. Hierdurch ist es möglich, beliebige Leitungsgeometrien von Flachleitern herzustellen und anschließend aus dem Baukasten entnehmend mit Isolationselementen 8 zu isolieren.

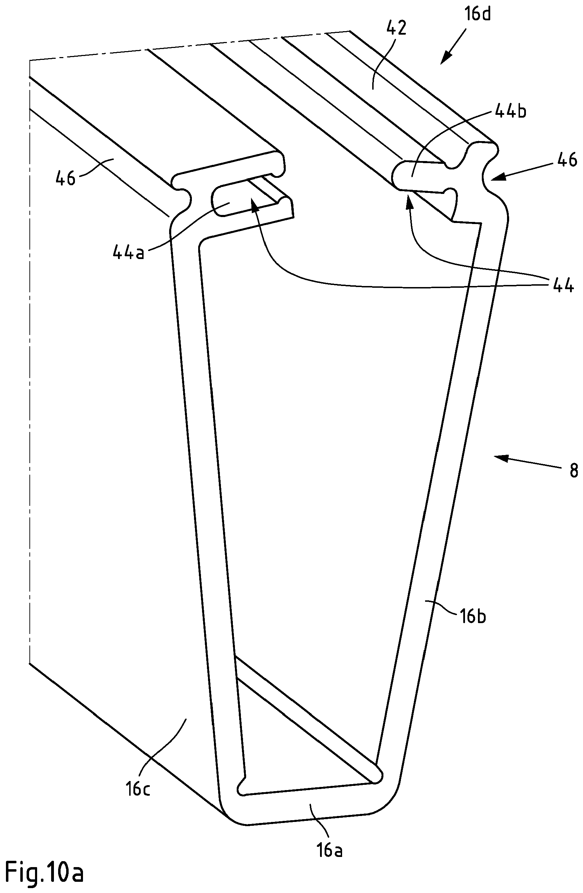

Fig. 10a zeigt ein Isolationselement 8 entsprechend Fig. 4g, wobei zu erkennen ist, dass eine Seitenwand 16d entlang der Längsachse 8c' geschlitzt ist. Der Schlitz 42 erstreckt sich bevorzugt parallel zur Längsachse 8c'. Der Schlitz 42 kann spaltfrei während des Extrudierens des Isolationselements 8 eingebracht werden. Auch kann der Schlitz 42 nach dem Extrudieren eingebracht werden. Im Querschnitt ist zu erkennen, dass an der Seitenwand 16d entlang des Schlitzes 42 zueinander weisende Berührflächen 44 gebildet sind.

Wie zu erkennen ist, haben die Berührflächen 44 zueinander kongruente Querschnittsprofile. Dabei hat eine Berührfläche einen Rücksprung 44a und eine Berührfläche 44 einen Vorsprung 44b. Auch zu erkennen ist ein hohlprofilförmiger Falz 46 an jeweils der Berührfläche 44 gegenüberliegenden Seite der Seitenwand 16d.

Durch den Vorsprung 55b und den Rücksprung 44a können die Berührflächen miteinander verriegelt werden, so dass die Seitenwand 16d trotz Schlitz 42 verschließbar ist. Dadurch kann ein Flachleiter 2 in das Isolationselement 8 eingeschoben werden und anschließend wird der Schlitz 42 verschlossen.

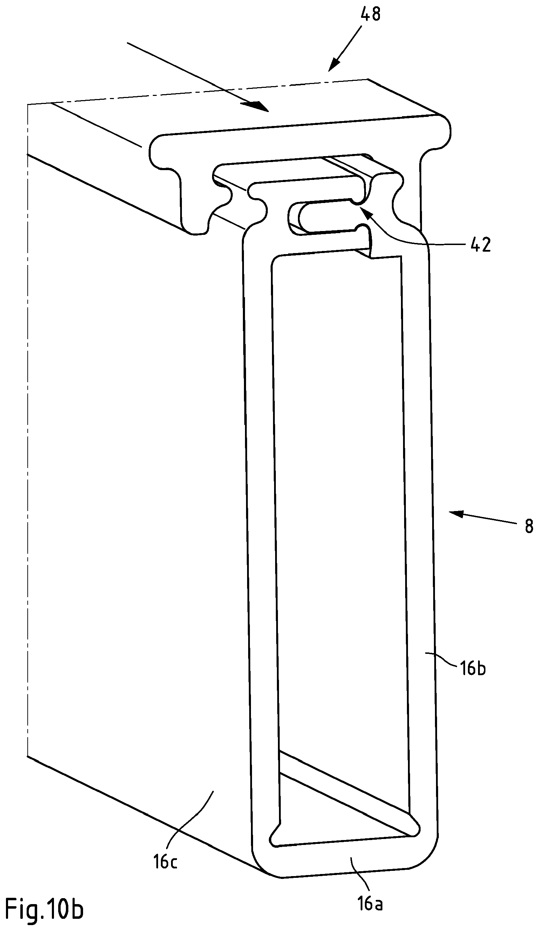

Zur besseren Fixierung der Berührflächen 44 zueinander wird auch vorgeschlagen, dass eine Verriegelungsschiene 48 über den Schlitz 42 geschoben werden kann, wie in Fig. 10b gezeigt. Die Verriegelungsschiene 48 kann an den Seitenwänden 16b und 16c oder an der Seitenwand 16d, hier insbesondere an der Falz 46 befestigt sein, insbesondere diesen Falz 46 umgreifen. Die Verriegelungsschiene 48 kann den Falz 46 klammerförmig umgreifen. Hierdurch kann die Verriegelungsschiene 48 eine Kraft auf den Schlitz 42 ausüben, so dass die Berührflächen 44 gegeneinander gedrückt werden.

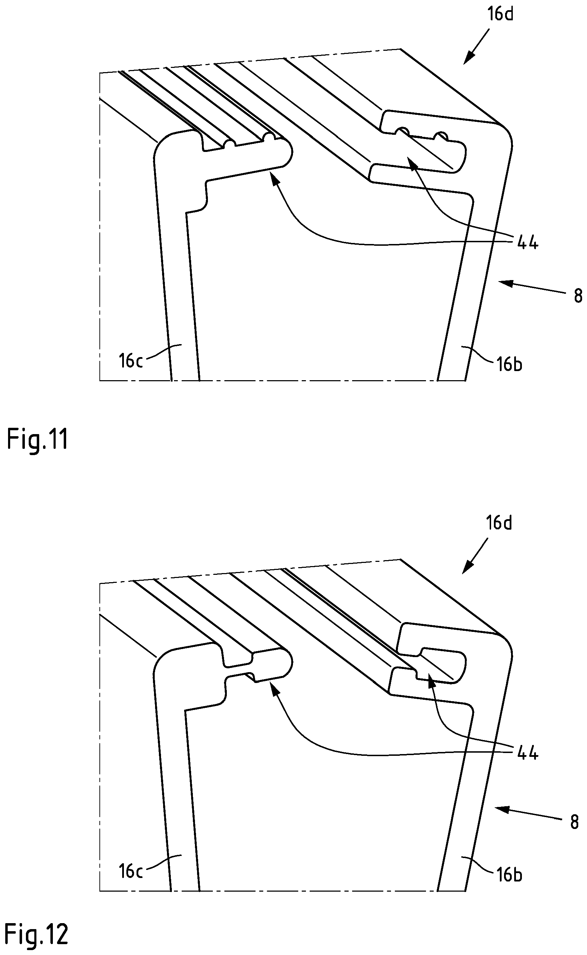

Die Figuren 11 und 12 zeigen verschiedene Ausführungsbeispiele von Berührflächen 44. Diese haben jeweils einen Rücksprung 44a und einen Vorsprung 44b. Dabei hintergreifen sich Vorsprung 44a und Rücksprung 44a indem dort zueinander passende Hinterschnitte und Vorsprünge angeordnet sind. Das dadurch bewirkte Zusammenspiel führt einerseits zu einem erhöhten Kraftschluss zwischen den Berührflächen, kann aber auch eine erhöhte Dichtwirkung gegenüber Feuchtigkeit haben.

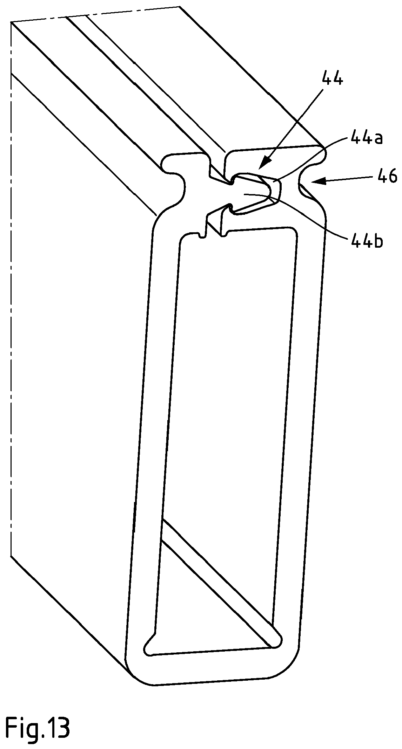

Fig. 13 zeigt ein weiteres Ausführungsbeispiel zweier Berührflächen 44. Hierbei kann der Vorsprung 44b pilzkopfförmig sein und mit zwei nach außen weisenden Kragen in einen Hinterschnitt des Rücksprungs 44a verrasten. Der Falz 46 kann jeweils auf der der Berührfläche 44 abgewandten Seite angeordnet sein.

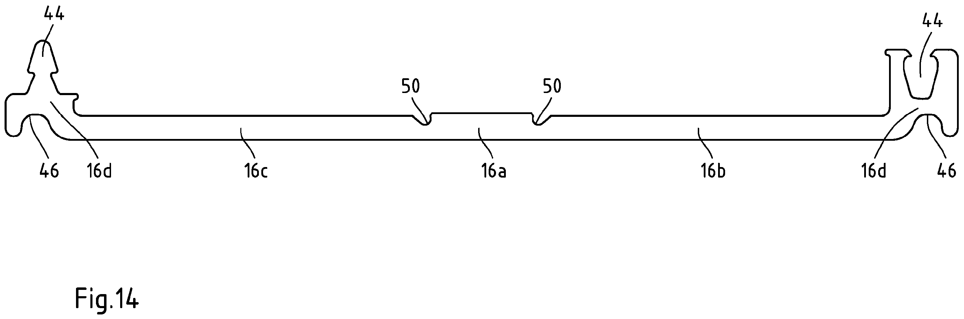

Fig. 14 zeigt einen Zuschnitt eines Isolationselements 8. Dieses kann als Flachteil in der gezeigten Form extrudiert werden. An den Übergängen zwischen den Seitenflächen 16a und 16b sowie 16a und 16c können Verjüngungen 50 in das Material des Isolationselements 8 als Biegehilfe oder Biegelinie eingebracht sein. Diese Verjüngungen 50 können sich über die gesamte Längsachse 8c' des Isolationselements 8 erstrecken. Das extrudierte Isolationselement 8 kann auch als "Endlosmaterial" extrudiert werden und anschließen bedarfsgerecht in Längsrichtung 8c' abgelängt werden. Die Seitenwand 16d kann an distalen Enden des extrudierten Isolationselements 8 jeweils zumindest in Teilen gebildet sein. An den beiden Enden können die Berührflächen 44 mit Vorsprung und Rücksprung gebildet sein.

### Bezugszeichenliste

- 2: Flachleiter
- 2a: breite Seite
- 2b: schmale Seite
- 2c: Stirnseite
- 2a': Hochachse
- 2b': Querachse
- 2c': Längsachse
- 4: Biegeradius
- 6: Biegewinkel
- 8: Isolationselement
- 8a: breite Seite
- 8b: schmale Seite
- 8c: Stirnseite
- 8a': Hochachse
- 8b': Querachse
- 8c': Längsachse
- 10: Aufnahme
- 12: Biegeradius
- 14: Biegewinkel
- 16: Mantel
- 16a,b: Seitenwände
- 18: Öffnung
- 20a, b: Aufnahmeflächen
- 20a', b': Hinterschnitt
- 22: Kommunikationsleitung
- 24: Deckel
- 26: Einschubrichtung
- 28: Öffnung
- 30: Verbinder
- 32: Rastnasten
- 34: Anschlag
- 40: Leitung
- 42: Schlitz
- 44: Berührfläche
- 44a: Rücksprung
- 44b: Vorsprung
- 46: Falz
- 48: Verriegelungsschiene
- 50: Verjüngung

## Patentansprüche

1. Kraftfahrzeugenergieleitungsbaukasten mit
- einem Flachleiter mit einem zumindest viereckigen Profil,
- einer Mehrzahl an Isolationselementen, welche eine an das Profil des Flachleiters angepasste Aufnahme aufweisen, wobei die Isolationselemente jeweils eine geringere Längenausdehnung als der Flachleiter aufweisen,
**dadurch gekennzeichnet,**
- **dass** der Flachleiter mit zumindest zwei Isolationselementen ausgewählt aus der Mehrzahl der Isolationselemente abschnittsweise ummantelt ist.

2. Kraftfahrzeugenergieleitungsbaukasten nach Anspruch 1,
**dadurch gekennzeichnet,**
- **dass** der Flachleiter sich entlang einer Längsachse erstreckt, wobei eine Hochachse sich entlang einer Flächennormalen einer breiten Oberfläche erstreckt und eine Querachse sich entlang einer Flächennormalen einer schmalen Oberfläche erstreckt und
- **dass** der Flachleiter entlang seiner Längsachse zumindest einmal um die Querachse und/oder die Hochachse gebogen ist.

3. Kraftfahrzeugenergieleitungsbaukasten nach Anspruch 1 oder 2,
**dadurch gekennzeichnet,**
- **dass** sich die Aufnahme des Isolationselements in Längsachse erstreckt und dass die Aufnahme eine senkrecht dazu verlaufenden Querachse und eine senkrecht dazu verlaufende Hochachse aufweist und dass das Isolationselement entlang seiner Längsachse zumindest einmal um die Querachse und/oder die Hochachse gebogen ist.

4. Kraftfahrzeugenergieleitungsbaukasten nach Anspruch 2 oder 3,
**dadurch gekennzeichnet,**
- **dass** ein Biegewinkel einer Biegung um die Querachse und/oder die Hochachse zumindest 15°, bevorzugt zumindest 30°, insbesondere 45° oder bis zu 90° beträgt und dass zumindest zwei Isolationselemente vorgesehen sind, deren Biegung an die Biegung des Flachleiters angepasst sind.

5. Kraftfahrzeugenergieleitungsbaukasten nach Anspruch 2 oder 3,
**dadurch gekennzeichnet,**
- **dass** zumindest zwei Isolationselemente mit Biegungen um voneinander verschiedene Biegewinkel und/oder voneinander verschiedene Biegerichtungen vorgesehen sind.

6. Kraftfahrzeugenergieleitungsbaukasten nach einem der vorangehenden Ansprüche,
**dadurch gekennzeichnet,**
- **dass** zumindest ein Isolationselement mit einer Aufnahme mit einer stirnseitigen Öffnung und einem der stirnseitigen Öffnung gegenüberliegenden Verschluss vorgesehen ist.

7. Kraftfahrzeugenergieleitungsbaukasten nach einem der vorangehenden Ansprüche,
**dadurch gekennzeichnet,**
- **dass** zumindest ein Isolationselement an einer ersten Stirnseite eine Aufnahme mit einer ersten lichten Weite hat und an einer der ersten Stirnseite gegenüberliegenden Stirnseite eine Aufnahme mit einer zweiten, gegenüber der ersten lichten Weite größeren lichten Weite hat.

8. Kraftfahrzeugenergieleitungsbaukasten nach einem der vorangehenden Ansprüche,
**dadurch gekennzeichnet,**
- **dass** zumindest ein Isolationselement in einem Querschnitt zumindest drei, bevorzugt vier Seitenwände aufweist, wobei eine der Seitenwand in Längsrichtung durchgehend geschlitzt ist, insbesondere
- **dass** entlang des Schlitzes zwei einander gegenüberliegende Berührflächen gebildet sind.

9. Kraftfahrzeugenergieleitungsbaukasten nach einem der vorangehenden Ansprüche,
**dadurch gekennzeichnet,**
- **dass** die Berührflächen zueinander kongruente Querschnittsprofile aufweisen, insbesondere
- **dass** eine der Berührflächen einen Rücksprung aufweist und eine der Berührflächen einen in den Rücksprung eingreifenden Vorsprung aufweist, insbesondere dass der Vorsprung pilzkopfförmig ist.

10. Kraftfahrzeugenergieleitungsbaukasten nach einem der vorangehenden Ansprüche,
**dadurch gekennzeichnet,**
- **dass** im Querschnittsprofil der geschlitzten Seitenwand auf einer zumindest einer der Berührflächen abgewandten Seitenfläche ein Falz angeordnet ist, insbesondere
- **dass** der Falz als Hohlprofil gebildet ist.

11. Kraftfahrzeugenergieleitungsbaukasten nach einem der vorangehenden Ansprüche,
**dadurch gekennzeichnet,**
- **dass** eine Verriegelungsschiene die geschlitzte Seitenwand entlang der Längsachse umgreift, insbesondere
- **dass** die Verriegelungsschiene in die der Berührfläche abgewandte Seitenfläche eingreift, insbesondere dass die Verriegelungsschiene den Falz hintergreift.

12. Kraftfahrzeugenergieleitungsbaukasten nach einem der vorangehenden Ansprüche,
**dadurch gekennzeichnet,**
- **dass** zumindest ein Isolationselement in einem Querschnitt zumindest drei zueinander fest angeordnete Seitenwände aufweist und eine vierte Seitenwand als Deckel gebildet ist, insbesondere
- **dass** der Deckel verschwenkbar an einer der Seitenwände angeordnet ist.

13. Kraftfahrzeugenergieleitungsbaukasten nach einem der vorangehenden Ansprüche,
**dadurch gekennzeichnet,**
- **dass** zumindest ein Isolationselement in einem Querschnitt zumindest drei zueinander fest angeordnete Seitenwände aufweist, dass eine Öffnung zwischen zwei Seitenwänden gebildet ist und dass die der Öffnung zugewandten Stirnkanten der Seitenwände nach innen weisende, nach innen geneigte Aufnahmeflächen oder nach außen weisende, nach außen geneigte Aufnahmeflächen aufweisen.

14. Verfahren zu Herstellung einer Kraftfahrzeugenergieleiters mit einem Kraftfahrzeugenergieleitungsbaukasten nach einem der vorangehenden Ansprüche, bei dem
- ein viereckig profilierter Flachleiter bereitgestellt wird,
- der Flachleiter zunächst abgelängt wird,
- der Flachleiter anschließend um eine Hochachse und/oder eine Querachse gebogen wird,
- entsprechend zumindest eines Biegewinkels einer Biegung des Flachleiters ein Isolationselement aus der Mehrzahl der Isolationselemente ausgewählt wird und anschließend das ausgewählte Isolationselement um den Flachleiter gelegt wird.

15. Verfahren nach Anspruch 14,
**dadurch gekennzeichnet,**
- **dass** zumindest zwei Isolationselemente in Längsrichtung nacheinander um den Flachleiter gelegt werden und die Isolationselement in einem Überlappungsbereich miteinander formschlüssig verrastet werden.
